# EUROPEAN PATENT SPECIFICATION

(11) **EP 0 957 247 B1**
(45) Date of publication and mention of the grant of the patent: **02.11.2005**
(21) Application number: 97949216.2
(22) Date of filing: 24.12.1997
(51) Int. Cl.: F02B 37/04, F02B 33/00, F02B 39/12, F02B 39/04, F02B 37/16

(54) **HYBRID SUPERCHARGED ENGINE**
GELADENER HYBRIDMOTOR
MOTEUR SURALIMENTE HYBRIDE

(30) Priority: 27.12.1996 JP 35884796; 30.11.1997 JP 34581697
(43) Date of publication of application: 17.11.1999
(73) Proprietor: Kanesaka Gijyutsu Kenkyusho Co., Ltd., Kawasaki-city, Kanagawa 210 (JP)
(72) Inventor: KANESAKA, Hiroshi, Kawasaki-city, Kanagawa 210 (JP)
(74) Representative: Valentine, Francis Anthony Brinsley
(86) International application number: PCT/JP1997/004768
(87) International publication number: WO 1998/029647

(56) References cited:
- GB-A- 2 300 450
- JP-A- 1 208 520
- JP-A- 8 028 292
- JP-A- 8 177 597
- JP-A- 8 189 370
- JP-A- 8 210 144
- JP-U- 61 181 834
- US-A- 5 142 866
- PATENT ABSTRACTS OF JAPAN vol. 1996, no. 11, 29 November 1996 (1996-11-29) & JP 08 189370 A (KOMATSU LTD), 23 July 1996 (1996-07-23)
- PATENT ABSTRACTS OF JAPAN vol. 1996, no. 07, 31 July 1996 (1996-07-31) & JP 08 061135 A (MAZDA MOTOR CORP), 5 March 1996 (1996-03-05)
- PATENT ABSTRACTS OF JAPAN vol. 016, no. 161 (M-1237), 20 April 1992 (1992-04-20) & JP 04 012133 A (FUJI HEAVY IND LTD), 16 January 1992 (1992-01-16)
- PATENT ABSTRACTS OF JAPAN vol. 013, no. 514 (M-894), 17 November 1989 (1989-11-17) & JP 01 208520 A (HITACHI LTD;OTHERS: 01), 22 August 1989 (1989-08-22)
- PATENT ABSTRACTS OF JAPAN vol. 1996, no. 11, 29 November 1996 (1996-11-29) & JP 08 177597 A (MAZDA MOTOR CORP), 9 July 1996 (1996-07-09)
- PATENT ABSTRACTS OF JAPAN vol. 1996, no. 12, 26 December 1996 (1996-12-26) & JP 08 210144 A (KANESAKA GIJUTSU KENKYUSHO:KK), 20 August 1996 (1996-08-20)
- PATENT ABSTRACTS OF JAPAN vol. 1996, no. 05, 31 May 1996 (1996-05-31) & JP 08 028292 A (KANESAKA GIJUTSU KENKYUSHO:KK), 30 January 1996 (1996-01-30)

## Description

### BACKGROUND OF THE INVENTION

### FIELD OF THE INVENTION

The present invention relates to a hybrid supercharging engine in which a supercharger having a power source except an exhaust gas is arranged in a supercharging system of an engine, particularly in a diesel engine (hereinafter refer to an engine) comprising a turbocharger (hereinafter refer to a TC) as a supercharger in series to the TC, thereby supercharging the engine by two steps, and to an improvement of Japanese Patent Application No. 8-358847.

### DESCRIPTION OF THE RELATED ART

A supercharging by the TC for the purpose of increasing an output of the diesel engine has been well popular in Europe and America where a lot of flatlands are included, however, it has not been currently popular in Japan where a lot of mountains and slopes are included for the following reasons.

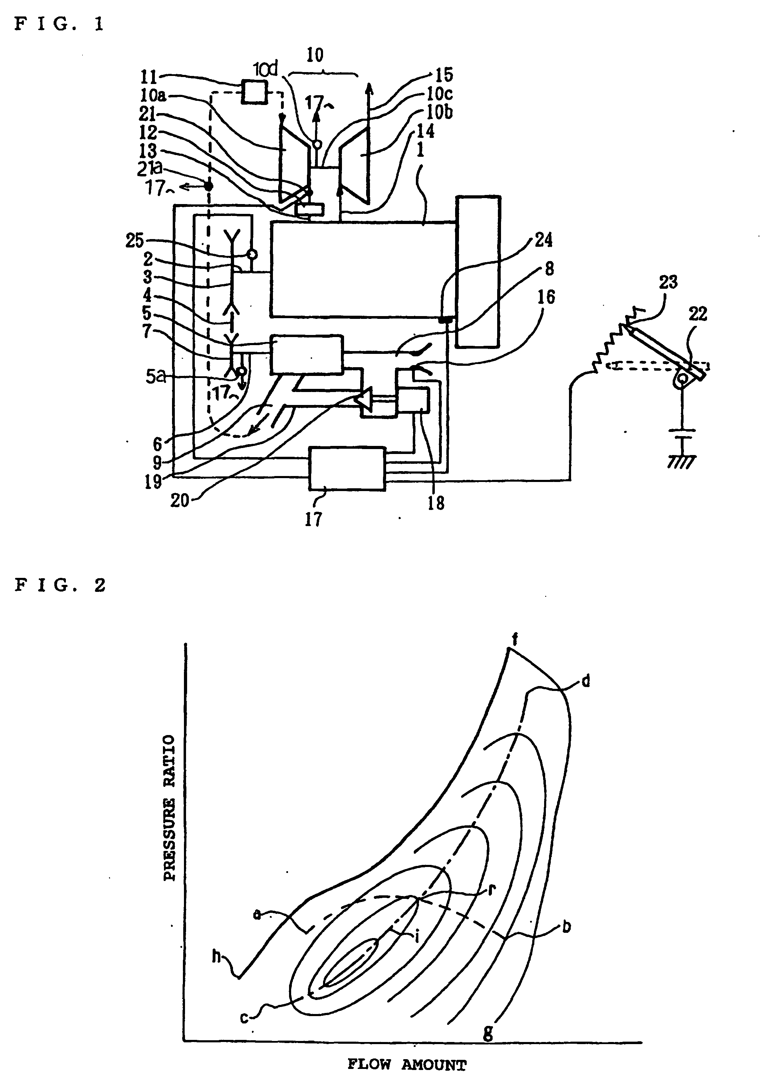

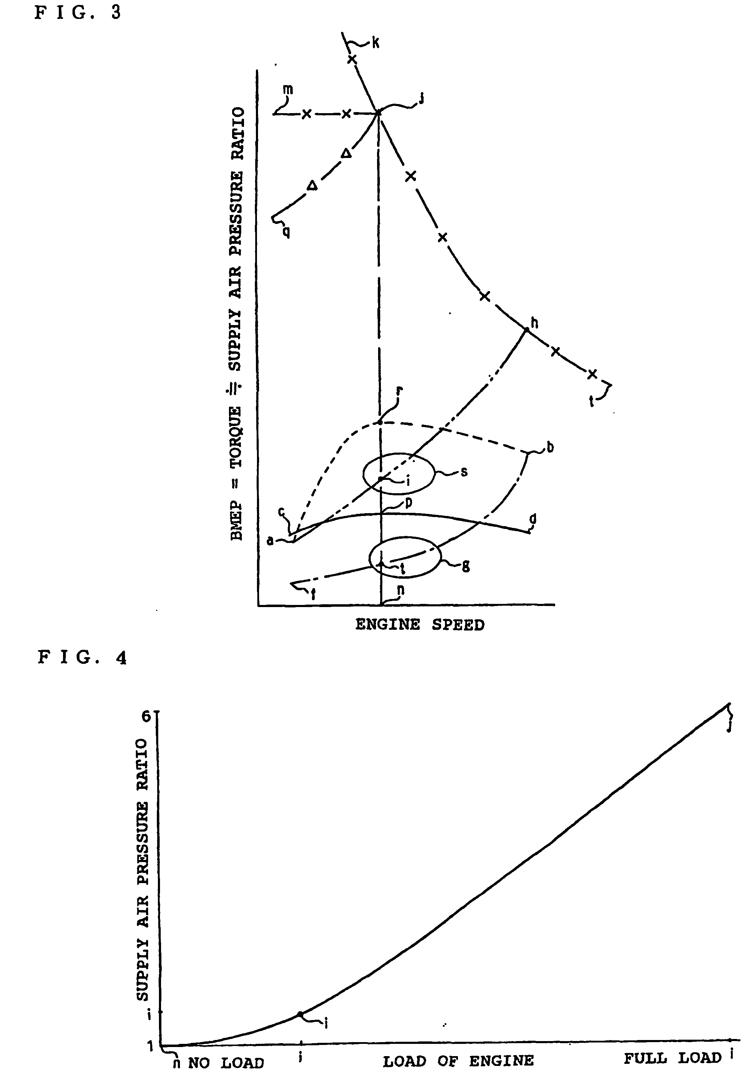

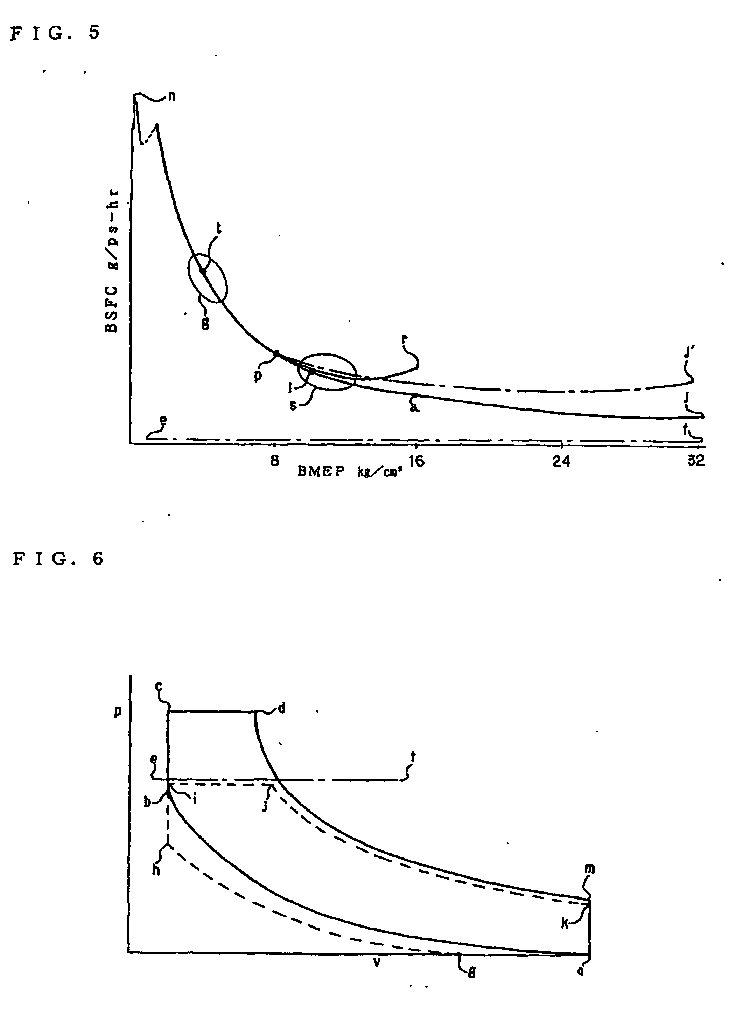

Accordingly, the TC mentioned above is a speed type and has a characteristic shown in Fig. 2, however there are the following disadvantages.
(a) When the TC is mounted as a vehicle engine which requires a low speed torque in accordance with a characteristic of increasing a pressure ratio (hereinafter refer to a pressure) in proportion to a rotating speed and a flow amount in the TC, it is possible to increase a torque shown by a line c-d at a time of no supercharger to a line a-b at a time of middle speed or more by setting an operation line to be a line a-b in Fig. 2, however, a low speed torque is insufficient in comparison with a no supercharging engine, so that a starting and accelerating performance from a stop state (hereinafter refer to a zero starting performance) is particularly insufficient as a vehicle engine.
(b) Due to the characteristic of the TC, in the TC supercharging engine, it is impossible to set not only a low speed torque but also a middle speed torque sufficiently higher than a high speed torque except by limiting a maximum output.
(c) In the item (a) mentioned above, the operation line a-b of the TC shown in Fig. 2 only crosses a maximum efficiency curve c-d at a point r, so that a specific fuel consumption (hereinafter refer to a BSFC) is low near a point r in Fig. 3 corresponding to the r in Fig. 2, however, an efficiency of the TC is low in an engine operating state except this, thereby not setting a low BSFC.
(d) As a vehicle engine, the engine is operated along a running resistance curve f-b in Fig. 3, so that a running specific fuel consumption of the vehicle expressed by a unit of km/l in accordance with the BSFC in a g zone in Fig. 3 having the highest operating frequency is widely affected. It has been known that the BSFC of the engine closes to an illustrated specific fuel consumption (hereinafter refer to a ISFC) shown by a chain line e-f in correspondence to an increase of the BMEP as shown in Fig. 5 and becomes low.
   With explaining this by Fig. 3, the vehicle supercharging engine operating along the line a-b in Fig. 3 supercharged by the TC increases the performance to the BMEP, for example, 16 kg/cm², and the BSFC at that time can be set to be 140 g/ps-hr as shown by a point a in Fig. 5, however, in the g zone in Fig. 3, a load of the engine becomes about a quarter and the BSFC at this time is increased to 200 g/ps-hr shown by a point t in accordance with Fig. 5.
   Accordingly, if the BMEP can be further increased to twice the TC supercharging engine shown by a point j in Fig. 5, for example, 32 kg/cm², the BSFC at a time of being applied a quarter load can be set to be 155 g/ps-hr shown by a point i from 200 g/ps-hr shown by the point t.
   The current TC supercharging engine should further increase the BMEP, and it is desired not only to lower the BSFC thereby but also to make a further compact, light weight and inexpensive engine when the output is the same, however, it is impossible for the reason mentioned above.
(e) A further reason of preventing the TC supercharging engine from being popular is a turbo lag.
   A speed of the TC of the engine in an idling state at a time when the vehicle is stopped is about 5000 rpm, and it is required that the TC is accelerated to about 50,000 rpm together with an acceleration of the vehicle, however, the TC has no supercharging function at a time of a zero starting acceleration, so that the vehicle is forced to perform a zero starting acceleration in a performance at a time of no supercharging expressed by the line c-d in Fig. 3.
(f) A compressing pressure of the engine is increased by supercharging, so that the maximum pressure at a time of combustion theoretically becomes over an allowed maximum pressure of the engine, however, also in the TC supercharging engine, a countermeasure is taken to meet this matter by reducing a compression ratio.

However, the compression ratio of the diesel engine is generally decided by taking a starting performance into consideration, so that a reduction of the compression ratio make a start of the engine hard. A start assisting apparatus such as a glow plug or the like is useful for starting the engine, but is not useful for preventing a white smoke containing a virulence material such as formaldehyde and the like immediately after the starting from discharging. Then, in 100 rpm at a time of starting in the TC and in 600 rpm at a time of idling immediately after the starting, it does not have a function as a supercharger, and does not increase a compressing pressure and a compressing temperature at a time of starting, so that the TC supercharging engine is currently worried about a countermeasure against a starting.

Figure 55 of GB 2,300,450A shows a hybrid supercharged engine system in accordance with the precharacterising portion of claim 1. In this known system, the supercharger is driven from the engine outlet shaft through a differential gear system having a further input member to which controlled amounts of power are applied.

An engine system according to the invention is characterised by the features set out in claim 1.

The invention will now be further described by way of example with reference to the drawings, in which:
Fig. 1 is a totally schematic view of an embodiment of an engine in accordance with the present invention;
Fig. 2 is a graph which shows a ratio between the flow amount and pressure in a TC;
Fig. 3 is a graph which shows a ratio between engine speed and torque and the supply air pressure;
Fig. 4 is a graph which shows the ratio between engine load and supply air pressure;
Fig. 5 is a graph which shows the relation between the ratio of supply air pressure in the engine and the specific fuel consumption;
Fig. 6 is a graph which shows a p-V line in a miller cycle;
Fig. 7 is a diagram which shows a valve opening and closing in an engine;
Fig. 8 is a diagram which shows a cycle line; and
Fig. 9 is a schematic view of a supply air cooling device.

### BEST MODE FOR CARRYING OUT THE INVENTION

An embodiment in accordance with the present invention will be described in detail with reference to Figs. 1 to 9.

Fig. 1 shows an embodiment of a hybrid supercharging engine in accordance with the present invention, in which a pulley 3 is fixed to a front end 2 of a crank shaft of an engine 1, and is connected to a pulley 7 fixed to a drive shaft 6 of an SC 5 by a belt 4, and the SC driven by the engine 1 sucks an ambient air through an intake pipe 8, compresses the ambient air to supply to a compressor 10a of a TC 10 through a discharge pipe 9 and a supply air cooling device 11, and the ambient air is further compressed in the TC 10 and increased a pressure thereof to be supplied to the engine 1 through a supply air pipe 13 and a supply air cooling device 12.

A pressure sensor 21 is attached to the supply air pipe 13, so that a supply air pressure is transmitted to an electronic controlling device 17. In this case, reference numeral 5a denotes an SC rotating speed sensor attached to the drive shaft 6 of the SC 5, which is connected by a wire so as to transmit a rotating speed of the SC 5 to the electronic controlling device 17.

Exhaust of the engine 1 drives a turbine 10b of the TC through an exhaust manifold 14, and is discharged to an ambient air through an exhaust pipe 15, and a power of the turbine 10b drives the compressor 10a through a shaft 10c. A rotating speed of the turbine 10b and the compressor 10a is detected by a TC rotating speed sensor 10d attached to the shaft 10c so as to be transmitted to the electronic controlling device 17.

A flow amount meter 16, a cooling water temperature sensor 24, an engine speed sensor 25 and a position sensor 23 for a load controlling amount of a driver are respectively provided in the intake pipe 8, within a cooling water of the engine 1, at the front end 2 of the crank shaft and in an accelerator pedal for controlling a drive condition of the engine 1, thereby transmitting respective information to the electronic controlling device 17, the controlling device 17 determines a controlling amount to transmit to an actuator, thereby controlling an opening degree of a bypass valve 20 provided in a bypass 19 by the actuator 18.

The cooling water temperature sensor 24 mounted within a cooling water jacket of the engine 1 measures a cooling water temperature in the engine 1, and the engine speed sensor 25 measures a rotating speed of the front end 2 of the crank shaft in the engine 1, thereafter respectively transmitting to the electronic controlling device 17, and the controlling device 17 instructs the actuator 18 to control the opening degree of the bypass valve 20, thereby making it easy to start the engine 1 and reducing a pollution level of the exhaust gas.

In the hybrid supercharging engine in accordance with the present invention mentioned above, the TC 10 in the engine 1 tunes in such a manner as to increase a pressure ratio along a maximum efficiency line c-d in a performance curve shown in Fig. 2 together with an increase of an flow amount and in such a manner as to become a point d corresponding to a maximum capacity of the TC 10 in a maximum speed of the engine 1, so that the engine 1 is supercharged by a supply air having a pressure ratio expressed by a line a-h in Fig. 3, and becomes a performance shown by a torque curve corresponding thereto. The torque curve expressed by the line a-h mentioned above shows a drive state that the bypass valve 20 is fully open and the SC 5 does not increase the supply air amount and the pressure ratio in accordance with the present invention.

In the case of driving the vehicle in accordance with the engine having a performance expressed by the torque curve shown by the line a-h in Fig. 3, the running resistance curve of the vehicle becomes substantially equal to the line a-h, so that an accelerating capacity of the vehicle is not obtained and the vehicle can not run until the low speed torque is increased, however, in accordance with the present invention, a supply air pressure and a supply air flow amount are increased by the TC supercharging engine tuned in the manner mentioned above and further the SC provided in series to the TC.

Accordingly, at a maximum speed of the engine 1, for example, at 2000 rpm, the flow amount and the pressure ratio of the TC 10 becomes a point d in Fig. 2, however, when intending to increase the flow amount while keeping the pressure ratio in the point d in accordance with the characteristic of the TC, the point d is going to be over a line f-g corresponding to a speed limit line of Fig. 2, so that there is a risk that a rotor (not shown) is broken by centrifugal force. Further, a reduction of the flow amount means that the point d is positioned in a left side of a surging limit line h-f, so that the TC loses the function thereof.

Accordingly, in a full load condition of the engine in accordance with the present invention, the supply air pressure ratio and the flow amount generated by the SC 5 are adjusted in such a manner as to maintain the point d in Fig. 2.

For example, at a time of a low speed in the TC supercharging engine, for example, at 1000 rpm, the flow amount of the TC becomes half, the supply air pressure ratio generated by the TC becomes a point i in Fig. 2, and the torque generated by the engine sucking the supply air in the point i is reduced to a point i in Fig. 3.

If the engine can give an exhaust energy having a flow amount at 2000 rpm to the TC 10, and be set to be the intake flow amount, the TC 10 is going to operate at the point d in Fig. 2. Accordingly, at a time of a low speed and full load of the present invention, the flow amount of the intake air is measured by the flow amount meter 16 so as to be the same flow amount as that at 2000 rpm even at 1000 rpm, it is transmitted to the electronic controlling device 17, and the controlling device 17 instructs the actuator 18 to rotate the bypass valve 20 in a direction of closing the bypass valve 20, thereby increasing the supply air amount of the SC 5.

In order to make the supply air amount the same as that at 2000 rpm even at 1000 rpm of the engine speed corresponding half thereof, it is necessary to make the supply air amount twice the supply air amount, thereby making the intake air amount flowing through the flow amount meter 16 constant by setting the pressure ratio within the discharge pipe of the SC 5 to be about 2. Accordingly, the pressure ratio within the supply air pipe becomes a pressure ratio expressed by 3 (generated by the TC) x 2 (generated by the SC) = 6, and the engine 1 can generate the torque shown by the point j in Fig. 3 by utilizing the supply air.

Further, even in the case that the engine speed is lowered, the bypass amount is adjusted by the flow amount meter 16, the electronic controlling device 17, the actuator 18 and the bypass valve 20 so that the intake air amount of the engine 1 becomes constant, thereby increasing the pressure ratio generated by the SC 5 at a lower speed than 1000 rpm, and increasing the torque to a point k in Fig. 3 so as to set the pressure ratio within the supply air pipe to be a value over 6, however, in this case, the combustion pressure of the engine sucking this becomes over the allowed maximum pressure of the engine 1, so that it is impossible to realize this.

Accordingly, at the engine speed lower than the point j in Fig. 3, the supply air pressure is transmitted to the electronic controlling device 17 by the pressure sensor 21 provided within the supply air pipe 13 so that the supply air pressure ratio is not over, for example 6, and the controlling device 17 instructs the actuator 18 to adjust the opening degree of the bypass valve 20, thereby making the supply air pressure ratio constant, so that the torque generated by the engine 1 is set to be a value corresponding to a point m in Fig. 3.

In the above description, the operation of the hybrid supercharging engine in accordance with the present invention has been mentioned at a time of fully loaded, however, an example of an operation at a time of partly loaded is shown by a line n-i-j at a time of, for example, 1000 rpm in Fig. 3, and a supply air pressure from a no load condition to a full load condition will be illustrated in Fig. 4.

Accordingly, a point n in Fig. 4 is in a state that no load is applied, the acceleration pedal 22 in Fig. 1 is positioned at a position shown by a solid line, the position sensor 23 transmits the no load condition to the electronic controlling device 17, and the controlling device 17 instructs the actuator 18 to make the bypass valve 20 fully open.

Accordingly, the SC 5 does not function, the ambient air is supplied to the engine 1 through the intake pipe 8, the bypass 19, the discharge pipe 9, the TC 10 and the supply air pipe 13, the TC 10 does not increase the supply air pressure ratio in this state, and the ambient air pressure, that is, the pressure ratio stays in a degree of 1.

In order to increase the load of the engine 1 to the torque of the point i in Fig. 3, when the accelerating pedal 22 is slightly stepped into and moved to a dotted line end so as to a little increase the fuel supply amount, the position sensor 23 transmits the position thereof to the electronic controlling device 17, however, the controlling device 17 instructs the actuator 18 to keep the bypass valve 20 still fully open state.

Accordingly, in the point i in Figs. 3 and 4, a supercharging is performed by only the TC 10, and the exhaust temperature is increased by an increase of the fuel supply amount, whereby the TC 10 increases the supply air pressure ratio to the point i in Fig. 4 and the engine 1 utilizes the supply air pressure so as to generate a torque higher than the point p at a time of no supercharging in Fig. 3 and the point i.

When the accelerating pedal 22 is moved in a direction of a position shown by the dotted line so as to increase the fuel supply amount, the position sensor 23 transmits the position thereof to the electronic controlling device 17, and the controlling device 17 instructs the actuator 18 to rotate the bypass valve 20 in a direction of closing the bypass valve 20 so as to increase the pressure within the discharge pipe 9, and together with the TC 10, increases the pressure ratio within the supply air pipe 13 in such a manner as to be a supply air amount corresponding to the fuel supply amount.

Further, at a time of fully loading, the accelerating pedal 22 is stepped into a position shown by the dotted line in Fig. 1, the fuel supply amount becomes maximum, the position sensor 23 transmits it to the electronic controlling device 17, the controlling device 17 instructs the actuator 18 to rotate the bypass valve 20 in a direction of further closing the bypass valve 20, increases the pressure within the discharge pipe by reducing the flow amount inversely flowing through the bypass valve 20, and increases the pressure within the supply air pipe 13 together with the TC 10.

The intake air amount to the engine 1 at this time is measured by the flow amount meter 16, and transmitted to the electronic controlling device 17, and the controlling device 17 instructs the actuator 18 to adjust the opening area of the bypass valve 20 so that the air amount is not over the point d in Fig. 2 corresponding to a limit of the TC 10.

Accordingly, the supply air pressure ratio generated by the TC 10 becomes, for example, 3, and because of the reason mentioned above, is adjusted so that the pressure ratio of the point j in Fig. 4 becomes 6 and the pressure ratio within the discharge pipe generated by the SC 5 becomes 2.

With still keeping this state, when the speed of the engine 1 becomes, for example, 1000 rpm or less, the intake air amount of the engine 1 is reduced in proportion to the engine speed, and the pressure ratio generated by the TC 10 is reduced along the line c-d in Fig. 2, so that the torque generated by the engine 1 changes to a line q-j in Fig. 3.

It is the that the torque curve of the hybrid supercharging engine in accordance with the present invention shown by a line q-j-h in Fig. 3 gives a performance some times the performance of the torque curve a-r-b of the TC supercharging engine in accordance with the conventional known art, however, as the vehicle engine attaching importance to the torque at a low speed, it is possible to make an ideal torque curve expressed by a line m-j as far as the torque is kept in the supply air pressure ratio at a time of fully loading shown in Fig. 4, for example, 6 even at the engine speed of 1000 rpm or less so as not to be over the allowed maximum pressure of the engine 1.

In order to cope with this, in accordance with the present invention, the pressure sensor 21 is attached within the supply air pipe 13, the pressure within the supply air pipe 13 is measured, the pressure is transmitted to the electric controlling device 17, and the controlling device 17 instructs the actuator 18 to correct the line q-j in Fig. 3 to the line m-j and to adjust the opening area of the bypass valve 20.

Next, the BSFC of the engine utilizing the hybrid supercharging system in accordance with the present invention will be described. As shown in Fig. 5, the BSFC is infinite because of the reason mentioned above when the BMEP is zero, however, as the BMEP increases, it closes to the ISFC, and the BSFC is reduced.

The BSFC at a time when the engine in accordance with the present invention generates the torque of the point j in Fig. 3 will be shown by a point j in Fig. 5, and at this time, the TC 10 operates in the point d in Fig. 2, have a high efficiency, and directs a low BSFC. However, the drive force of the SC mechanically driven is added as a frictional average effective pressure FMEP, and increases the BSFC from the point j in Fig. 5 to the point j', so that an excellence of the BSFC in the maximum torque point is not apparently present.

However, a load ratio having the highest using frequency of the vehicle engine is an s zone in Fig. 3, has a load ratio about a quarter thereof, and the BSFC at this time determines a running specific fuel consumption of the vehicle. When this is drawn in Fig. 5, the s zone can be obtained.

On the contrary, the maximum torque of the general TC engine becomes a point r in Fig. 3, and a zone having a high using frequency becomes a g. When this is drawn in Fig. 5, the BSFC becomes the g zone, the difference in the running specific fuel consumption is apparent by comparing with the s zone of the engine in accordance with the present invention.

In this case, in the engine to which the high supply air pressure, for example, reaching the pressure ratio 6 is supplied, the compressing pressure shown by the point b is high at the normal compressing ratio 14 to 16, as shown by the solid line a-b in the p-v line of Fig. 6, further, the combustion pressure becomes high as the line b-c-d, thereby being over the allowed maximum pressure of the engine shown by the line e-f.

A reduction of the compression ratio so as to cope with this not only increases the BSFC but also reduces the expansion ratio, so that the exhaust temperature becomes high and a thermal load of the engine is increased.

Then, in accordance with the engine of the present invention, the compression ratio can be made low in comparison with the line a-b, the compression pressure can be made low to the point h and the combustion pressure can be made lower than the allowed maximum pressure of the engine corresponding to the line e-f as shown by the line h-i-j by the combustion thereafter by starting the compression at the point g in the middle of the compression process and ending the compression process at the point h, as shown in Fig. 6, with using the miller cycle.

Accordingly, the expansion process becomes to the line j-k which is substantially equal to the line d-m in the case that the compression ratio is high, the expansion ratio does not change even by reducing the compression ratio, and not only the BSFC does not change but also the exhaust temperature can be reduced by the high expansion ratio.

The miller cycle in the engine in accordance with the present invention can be realized by a so-called "early closing" which is structured such that a rotary valve is provided in an intake air passage of the known engine, and a closing timing is closed in the middle of the suction process, for example, in the point g in Fig. 6, however, can be also realized by a known "delayed closing".

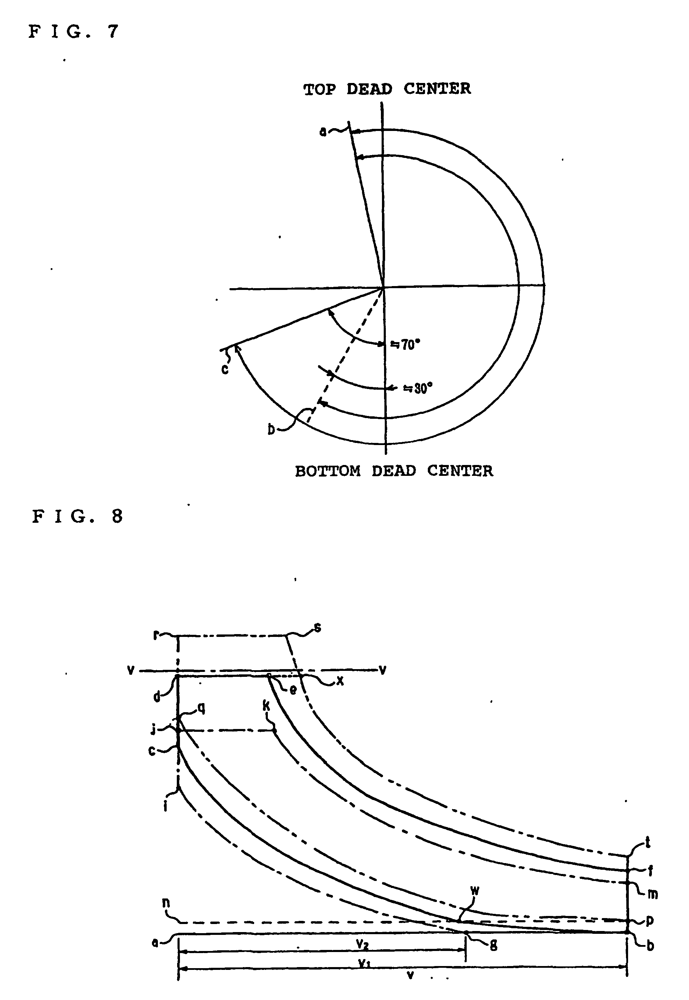

Fig. 7 shows an example thereof, and in the normal engine, the suction valve (not shown) opens at an angle a slightly before a top dead center corresponding to about 10 degrees and closes at an angle b about 30 degrees after a bottom dead center, however, in accordance with the present invention, the intake is started at the angle a, the intake valve is kept open after passing through the bottom dead center and becoming a compressing process, the air within the cylinder once sucked to the bottom dead center of the suction process is again continued to be discharged into the suction passage after entering into the compressing process, thereby not increasing the pressure within the cylinder. However, when reaching an angle c corresponding to about 70 degrees after passing the bottom dead center, the intake valve is closed.

When this is shown in Fig. 6, the point g is obtained, and from this point, an actual compressing process is started, so that the delayed closing miller cycle can be obtained in the manner mentioned above.

In the case that the engine of the present invention is an engine for a ship which requires a maximum BMEP near the maximum speed of the engine and does not require a high BMEP in low and medium speeds, when a tuning is performed such as to set the engine speed in the point j in Fig. 3 to be the maximum speed of the engine, for example, 2000 rpm and set the point d in Fig. 2 corresponding to the maximum capacity of the TC to be the point h in Fig. 3, for example, 4000 rpm, the maximum BMEP can be generated at the maximum speed of the engine because of the reason mentioned above.

In the case that the engine of the present invention is an engine for a construction machine which requires a low and medium speed BMEP higher than the BMEP in the maximum speed of the engine, that is, so-called high torque rise, the BMEP in the point t in Fig. 3 can be obtained, for example, at 2500 rpm by further increasing the engine speed in a state of keeping the flow amount of the TC in the engine operated at the maximum performance of the TC shown by the point d in Fig. 2, for example, at 2000 rpm and giving the performance of the point h in Fig. 3 constant.

This is explained in Fig. 8, in which the supply air pressure of the point h in Fig. 3 corresponds to a line a-b in Fig. 8, the engine starts suctioning from the top dead center of the suction process in the point a, the intake valve is closed near the point b corresponding to the bottom dead center, the compressing process is started from the point b to become the upper dead center at the point c, and the exhaust valve is opened at the point f by expansion after burning to increase the pressure to the line c-d-e, however, when the engine speed is increased as it is, the flow amount flowing through the TC increases and the operating point of the TC goes over the point d in Fig. 2 so as to rise. Accordingly, for example, when the engine speed is 1.25 times increased from 2000 rpm to 2500 rpm, the suction air amount of the engine is 1/1.25 times set in inverse proportion to the engine speed, so that it is necessary to make the flow amount of the TC 10 constant. Then, the miller cycle mentioned above can make is possible.

Then, Fig. 8 explains the matter, for example, when the engine speed is 2000 rpm, the engine sucks an air at an amount of v₁ from the point a to the point b, however, when the engine speed becomes 2500 rpm, the substantial suction amount becomes v₂ corresponding to 1/1.25 times the amount v₁ by keeping the intake valve open to the point g in the middle of the compression process, so that the flow amount of the TC can be made constant even when the engine speed is increased.

The p-v line at this time becomes a line g-i-j-k-m-b, and the BMEP is reduced to a level of 1/1.25 the level at a time of 2000 rpm, as is understood from Fig. 8, so that it becomes a point t in Fig. 3.

On the contrary, when the engine speed is reduced, the supply air pressure is increased because of the reason mentioned above. When this matter is shown in Fig. 8, the supply air pressure is increased to a line n-p, the p-v line becomes a line p-q-r-s-t, and the maximum pressure is over the allowed maximum pressure of the engine shown by the line v-v.

Accordingly, also in this case, in accordance with applying the miller cycle, as mentioned above, the p-v line becomes a line w-c-d-e-f-p by closing the intake valve at the point w.

As a fate of the high ratio output engine, the engine in accordance with the present invention must reduce the compression ratio, so that in view of a starting performance, particularly in a starting at a low temperature, it is necessary to cope with by a new technology.

In the engine of the present invention, a speed driven by a starter (not shown) is about 100 rpm at a time of starting, however, the speed is sensed by the engine speed sensor 25 provided in the front end 2 of the crank shaft so as to transmit to the electronic controlling device 17, and the controlling device 17 instructs the actuator 18 to fully close the bypass valve 20, so that the SC 5 compresses the intake air in an adiabatic manner and increases the pressure and the temperature of the air within the discharge pipe 9.

Accordingly, the supply air is supplied to the engine through the supply air cooling device 11, the compressor 10a and the supply air cooling device 12, however, the TC 10 has no function of increasing the pressure at such a low speed, thereby not increasing the pressure. However, even when the compression ratio of the engine is 8, it is possible to increase the pressure ratio to 2 by the SC 5, so that it is possible to increase the pressure within the cylinder to a pressure corresponding to the compression ratio 16 obtained by a formula 8 x 2 = 16, however, the supply air made a high temperature by the SC 5 is also cooled by passing through the supply air cooling devices 11 and 12, and the compression temperature of the engine is reduced by a reduction of the supply air temperature, then it is impossible to start.

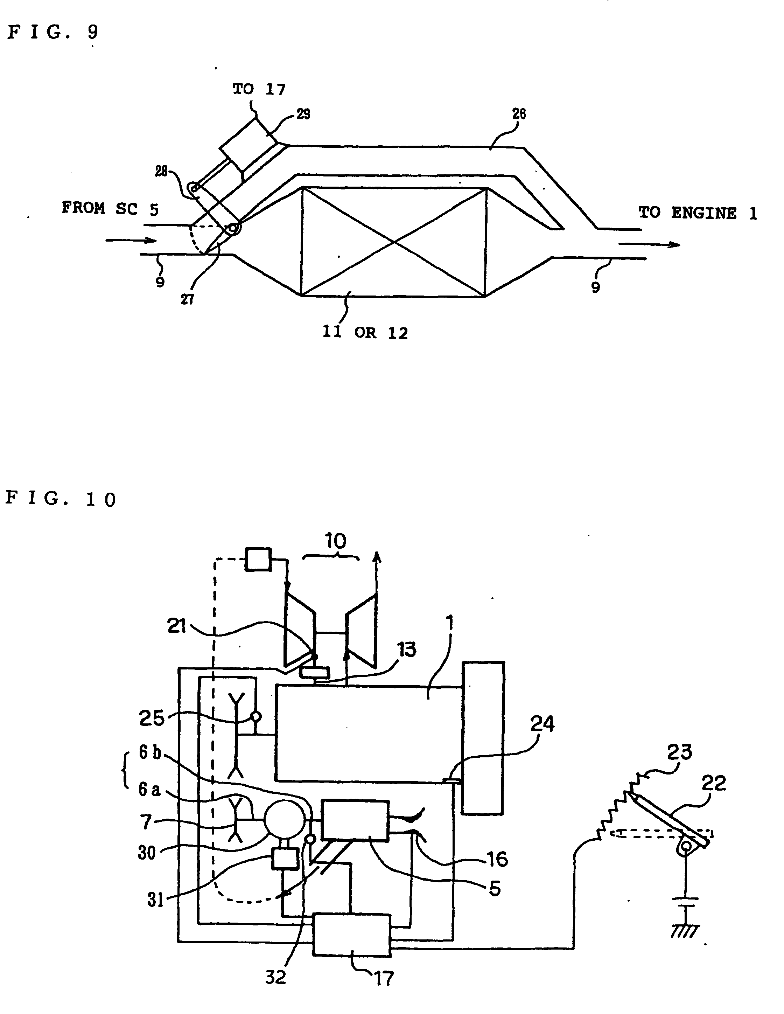

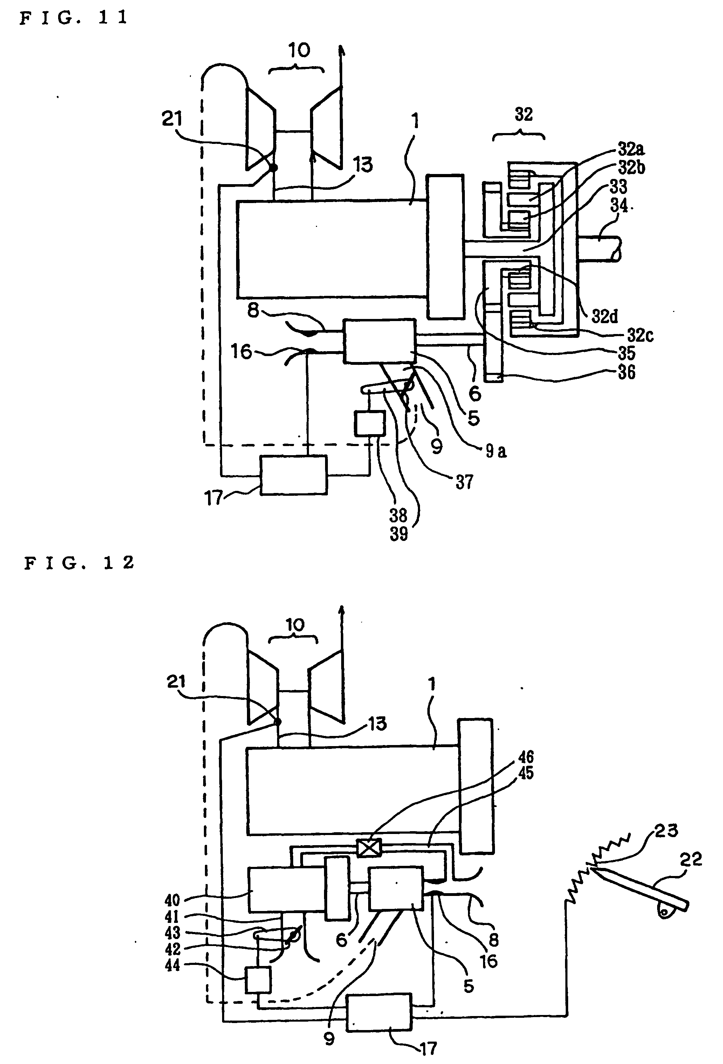

Then, as shown in Fig. 9, a bypass 26 is provided between the supply air inlet and the outlet of the supply air cooling devices 11 and 12, and a switching valve 27 is attached to a connecting portion between the bypass 26 and the discharge pipe 9, so that the passage to the supply air cooling devices 11 and 12 end of the discharge pipe 9 in such a manner that the supply air is not cooled by the supply air cooling devices 11 and 12 and the passage to the bypass 26 is opened. Accordingly, the cooling water temperature of the engine at a time of starting is low, the cooling water sensor 24 shown in Fig. 1 transmits the temperature to the electronic controlling device 17, the controlling device 17 instructs an actuator 29 to press a lever 28, close the passage to the supply air cooling devices 11 and 12 end of the discharge pipe 9 and operate the switching valve 27 so as to open the passage of the bypass 26 end.

Immediately after the engine is started, since the engine cooling water temperature is low, the compression temperature does not become high, the fuel is incompletely burned and the white smoke containing a solution component such as a formaldehyde and the like is discharged.

In order to cope with this matter, in accordance with the engine of the present invention, even when the position sensor 23 transmits to the electronic controlling device 17 an information that the position of the accelerating pedal 22 is in an idling state, the electronic controlling device 17 instructs the actuator 18 to close the bypass valve 20 in accordance with the low temperature information from the cooling water temperature sensor 24, and increases the compression temperature and the pressure of the engine by increasing the pressure and the temperature of the discharge pipe 9 by means of the SC 5.

Accordingly, it is avoided that the supply air is cooled by the supply air cooling devices 11 and 12.

## Claims

1. A hybrid supercharged engine system comprising:
an engine (1) having an inlet (13) for air and an outlet (14) for exhaust gases and including an output shaft (2);
a turbocharger (10) having a turbine (10b) connected to the engine exhaust outlet (14) and a compressor (10a) having an inlet (9) and an outlet (12) connected to the engine inlet (13);
a volume type supercharger (5) having an air intake (8), an air outlet (9), and a drive shaft (6), said supercharger (5) being connected in series with the turbocharger (10), the drive shaft (6) being drivingly coupled to the engine output shaft (2) to drive the supercharger to provide pressurized air to the engine (1);
an airflow adjuster (20) for controlling the delivery air pressure of the supercharger (5);
an engine speed sensor (25), an engine load sensor (23), and control means (17) responsive to the said sensors to change the air pressure supplied to the engine by the turbocharger and the volume type supercharger,
**characterised in that**:
the maximum compressor output of the turbocharger (10) is produced at an engine speed which is higher than the maximum torque engine speed for the engine;
airflow volume measuring means (16) are provided to measure the airflow supplied to the engine;
the control means (17) are also responsive to the airflow volume measuring means (16) to maintain the airflow rate constant without relation to engine speed; and
the supercharger drive shaft (16) is drivably coupled to the engine output shaft by fixed-ratio drive means (3,4,7).

2. An engine system according to claim 3, wherein the airflow volume measuring means (16) comprises an airflow sensor in the air intake of the supercharger.

3. An engine system according to claim 1 or 2, wherein the airflow adjuster controls a bypass at the air outlet of the supercharger (5), and the bypass is connected between the air intake (8) and the air outlet (9) of the supercharger.

4. An engine system according to claim 3, wherein the airflow adjuster includes a movable valve (20) in the bypass to adjust the airflow through the bypass.

5. An engine system according to claim 3 or 4, wherein the airflow adjuster also includes a supercharger rotation speed sensor (5a).

6. An engine system according to any preceding claim, wherein the airflow adjuster includes means for maintaining substantially constant the airflow volume delivered to the air intake of the engine.

7. An engine system according to claim 6, wherein the airflow adjuster includes means (21) for restricting the pressure of the air supplied to the air intake (13) of the engine, to a predetermined value so that the maximum pressure range of the engine may not be exceeded.

8. An engine system according to claim 1, wherein the airflow adjuster includes also a controller valve at the supercharger exit, and this controller valve can adjust the air outlet pressure of the supercharger.

9. An engine system according to any preceding claim and including a cooler (11 or 12) for the outlet of the supercharger (SC) or turbocharger (TC), a bypass (26) extends between the inlet and the outlet of the bypass (26), a valve (27) is operable by an actuator (29) to switch air into the bypass (26).

## Patentansprüche

1. Hybrid-Ladermotorsystem, das Folgendes umfasst:
einen Motor (1) mit einem Einlass (13) für Luft und einem Auslass (14) für Abgase und mit einer Abtriebswelle (2) ;
einen Turbolader (10) mit einer mit dem Motorabgasauslass (14) verbundenen Turbine (10b) und einem Kompressor (10a), der einen Einlass (9) und einen mit dem Motoreinlass (13) verbundenen Auslass (12) aufweist;
einen volumetrischen Verdrängungslader (5) mit einem Lufteinlass (8), einem Luftauslass (9) und einer Antriebswelle (6), wobei der genannte Verdrängungslader (5) in Serie mit dem Turbolader (10) geschaltet ist, wobei die Antriebswelle (6) antriebsmäßig mit der Motorabtriebswelle (2) gekoppelt ist, um den Verdrängungslader zum Erzeugen von Druckluft zum Motor (1) anzutreiben;
eine Luftmengendrossel (20) zum Regulieren der Zufuhr von Luftdruck zu dem Verdrängungslader (5);
einen Motordrehzahlsensor (25), einen Motorlastsensor (23) und ein Steuermittel (17), das auf die genannten Sensoren anspricht, um den von dem Turbolader und dem volumetrischen Verdrängungslader dem Motor zugeführten Luftdruck zu ändern, **dadurch gekennzeichnet, dass**:
die maximale Kompressorleistung des Turboladers (10) bei einer Motordrehzahl erzeugt wird, die höher ist als die Motordrehzahl bei maximalem Drehmoment für den Motor;
Luftmengenvolumenmessmittel (16) vorgesehen sind, um die dem Motor zugeführte Luftmenge zu messen;
das Steuermittel (17) auch auf das Luftmengenvolumenmessmittel (16) anspricht, um die Luftströmungsgeschwindigkeit unabhängig von der Motordrehzahl konstant zu halten; und
die Verdrängungsladerantriebswelle (16) über ein Antriebsmittel (3, 4, 7) mit festern Übersetzungsverhältnis antriebsmäßig mit der Motorabtriebswelle gekoppelt ist.

2. Motorsystem nach Anspruch 3, bei dem das Luftmengenvolumenmessmittel (16) einen Luftmengensensor im Lufteinlass des Verdrängungsladers umfasst.

3. Motorsystem nach Anspruch 1 oder 2, bei dem die Luftmengendrossel einen Bypass am Luftauslass des Verdrängungsladers (5) reguliert und der Bypass sich zwischen dem Lufteinlass (8) und dem Luftauslass (9) des Verdrängungsladers befindet.

4. Motorsystem nach Anspruch 3, bei dem die Luftmengendrossel ein bewegliches Ventil (20) im Bypass aufweist, um die Luftmenge durch den Bypass zu justieren.

5. Motorsystem nach Anspruch 3 oder 4, bei dem die Luftmengendrossel auch einen Verdrängungslader-Drehzahlsensor (5a) aufweist.

6. Motorsystem nach einem der vorherigen Ansprüche, bei dem die Luftmengendrossel Mittel aufweist, um das dem Lufteinlass des Motors zugeführte Luftmengenvolumen im Wesentlichen konstant zu halten.

7. Motorsystem nach Anspruch 6, bei dem die Luftmengendrossel Mittel (21) aufweist, um den Druck der dem Lufteinlass (13) des Motors zugeführten Luft auf einen vorbestimmten Wert zu beschränken, so dass der maximale Druckbereich des Motors nicht überschritten wird.

8. Motorsystem nach Anspruch 1, bei dem die Luftmengendrossel auch ein Steuerventeil am Ausgang des Verdrängungsladers aufweist, und wobei dieses Steuerventil den Luftauslassdruck des Verdrängungsladers justieren kann.

9. Motorsystem nach einem der vorherigen Ansprüche mit einem Kühler (11 oder 12) für den Auslass des Verdrängungsladers (SC) oder Turboladers (TC), einem Bypass (26), der zwischen dem Einlass und dem Auslass des Bypasses (26) verläuft, und einem Ventil (27), das von einem Stellglied (29) betätigt werden kann, um Luft in den Bypass (26) umzuschalten.

## Revendications

1. Système de moteur hybride suralimenté comprenant :
un moteur (1) ayant une admission (13) d'air et une sortie (14) de gaz d'échappement et comportant un arbre de sortie (2) ;
un turbochargeur (10) ayant une turbine (10b) raccordée à la sortie d'échappement de moteur (14) et un compresseur (10a) ayant une admission (9) et une sortie (12) raccordé à l'admission de moteur (13) ;
un dispositif de suralimentation de type volumétrique (5) ayant une admission d'air (8), une sortie d'air (9), et un arbre d'entraînement (6), ledit dispositif de suralimentation (5) étant raccordé en série au turbochargeur (10), l'arbre d'entraînement (6) étant couplé en un mode d'entraînement à l'arbre de sortie de moteur (2) afin d'entraîner le dispositif de suralimentation pour fournir de l'air pressurisé au moteur (1) ;
un régulateur de débit d'air (20) pour commander la pression d'air de distribution du dispositif de suralimentation (5) ;
un capteur de vitesse moteur (25), un capteur de charge moteur (23) et des moyens de commande (17) sensibles auxdits capteurs pour changer la pression d'air fournie au moteur par le turbochargeur et le dispositif de suralimentation de type volumétrique ;
**caractérisé en ce que** :
la sortie de compresseur maximum du turbochargeur (10) est produite à une vitesse moteur qui est supérieure à la vitesse moteur au couple maximum du moteur ;
des moyens de mesure de débit volumétrique d'air (16) sont fournis pour mesurer le débit d'air fourni au moteur ;
les moyens de commande (17) sont aussi sensibles aux moyens de mesure de débit volumétrique d'air (16) afin de maintenir constant le débit d'air indépendamment de la vitesse moteur ; et
l'arbre d'entraînement de dispositif de suralimentation (16) est couplé en un mode d'entraînement à l'arbre de sortie du moteur par des moyens d'entraînement à rapport fixe (3, 4, 7).

2. Système de moteur selon la revendication 3, dans lequel le moyen de mesure de débit volumétrique d'air (16) comprend un capteur de débit d'air dans l'admission d'air du dispositif de suralimentation.

3. Système de moteur selon la revendication 1 ou 2, dans lequel le régulateur de débit d'air commande une dérivation au niveau de la sortie d'air du dispositif de suralimentation (5), et la dérivation est raccordée entre l'admission d'air (8) et la sortie d'air (9) du dispositif de suralimentation.

4. Système de moteur selon la revendication 3, dans lequel le régulateur de débit d'air comporte un clapet mobile (20) dans la dérivation afin de régler le débit d'air à travers la dérivation.

5. Système de moteur selon la revendication 3 ou 4, dans lequel le régulateur de débit d'air comporte aussi un capteur de vitesse de rotation de dispositif de suralimentation (5a).

6. Système de moteur selon l'une quelconque des revendications précédentes, dans lequel le régulateur de débit d'air comporte un moyen pour maintenir substantiellement constant le débit volumétrique d'air fourni à l'admission d'air du moteur.

7. Système de moteur selon la revendication 6, dans lequel le régulateur de débit d'air comporte un moyen (21) pour restreindre la pression de l'air fourni à l'admission d'air (13) du moteur à une valeur prédéterminée de telle sorte que la gamme de pression maximum du moteur ne puisse pas être dépassée.

8. Système de moteur selon la revendication 1, dans lequel le régulateur de débit d'air comporte aussi un clapet de régulation au niveau de la sortie du dispositif de suralimentation, et ce clapet de régulation peut régler la pression de sortie d'air du dispositif de suralimentation.

9. Système de moteur selon l'une quelconque des revendications précédentes et comportant un refroidisseur (11 ou 12) pour la sortie du dispositif de suralimentation (SC) ou du turbochargeur (TC), une dérivation (26) s'étend entre l'admission et la sortie de la dérivation (26), un clapet (27) est actionnable par un actionneur (29) afin de commuter l'air à l'intérieur de la dérivation (26).
